# EUROPÄISCHE PATENTSCHRIFT

(11) **EP 1 105 843 B1**
(45) Veröffentlichungstag und Bekanntmachung des Hinweises auf die Patenterteilung: **27.11.2002**
(21) Anmeldenummer: 99944512.5
(22) Anmeldetag: 25.08.1999
(51) Int. Cl.: G06T 7/40

(54) **VERFAHREN UND VORRICHTUNG ZUR ERFASSUNG VON OBJEKTFARBEN**
METHOD AND DEVICE FOR DETECTING COLOURS OF AN OBJECT
PROCEDE ET DISPOSITIF DE DETECTION DES COULEURS D'UN OBJET

(30) Priorität: 26.08.1998 DE 19838806
(43) Veröffentlichungstag der Anmeldung: 13.06.2001
(73) Patentinhaber: Max-Planck-Gesellschaft zur Förderung der Wissenschaften e.V., 80539 München (DE)
(72) Erfinder: HUB, Andreas, D-81377 München (DE); FROMHERZ, Peter, D-80686 München (DE)
(74) Vertreter: Hertz, Oliver, Dr.
(86) Internationale Anmeldenummer: EP9906240
(87) Internationale Veröffentlichungsnummer: WO00013143

(56) Entgegenhaltungen:
- EP-A- 0 806 863
- BENITEZ-DIAZ D ET AL: "NEURAL-LIKE NETWORK MODEL FOR COLOR IMAGES ANALYSIS SYSTEMS" PROCEEDINGS OF THE INTERNATIONAL CONFERENCE ON NEURAL NETWORKS (ICNN),US,NEW YORK, IEEE, Seite 1415-1420 XP000503856 ISBN: 0-7803-1902-8
- MOGHADDAMZADEH A ET AL: "A FUZZY TECHNIQUE FOR IMAGE SEGMENTATION OF COLOR IMAGES" PROCEEDINGS OF THE CONFERENCE ON FUZZY SYSTEMS,US,NEW YORK, IEEE, Bd. CONF. 3, Seite 83-88 XP000529241 ISBN: 0-7803-1897-8
- CARTOSIO F ET AL: "A FUZZY DATA-FUSION APPROACH TO SEGMENTATION OF COLOUR IMAGES" PROCEEDINGS OF THE ASILOMAR CONFERENCE ON SIGNALS, SYSTEMS AND COMPUTERS,US,NEW YORK, IEEE, Bd. CONF. 22, Seite 310-314 XP000130270

## Beschreibung

Die Erfindung betrifft Verfahren zur optischen Objekterfassung, insbesondere zur Erfassung von Objekt- und Segmentfarben (im folgenden kurz: Objektfarben), aber auch zur Erfassung geometrischer Objekteigenschaften, wie z.B. die Größe, Position und Entfernung von Objekten in einer Bildszene, und Vorrichtungen zur Anwendung der Verfahren. Unter Erfassung von Objektfarben wird allgemein die Ermittlung der Wahrnehmung von Objektfarben und somit die Ermittlung einer Farbangabe (z. B. Angabe einer Farbwahrnehmungsklasse) zu einem erfaßten Objekt verstanden, die ein Beobachter des Objekts in der aktuellen Szene bei visueller Betrachtung zur Bezeichnung seiner Farbwahrnehmung nennen würde oder wie sie in anderen psycho-physischen Experimenten objektiv bestimmt werden können (z.B. Nachmischen von Farben, Detektion, experimentelle Kompensationsexperimente).

Das menschliche visuelle System ist dazu eingerichtet, in Bruchteilen von Sekunden beim Beobachter Eigenschaften einzelner Objekte oder Segmente im Gesichtsfeld bewußt werden zu lassen. Die betrachteten Objekte werden durch Informationen über die Farbe, Größe und Entfernung und dgl. erfaßt, wodurch insbesondere ein sicheres Bewegen im Raum ermöglicht wird. Die visuelle Objekterkennung erfolgt durch eine Erfassung von Objekt- oder Segmentgrenzen und eine Zuordnung von Objektfarben, denen auf der Grundlage der Erfahrung eine bestimmte Bezeichnung zugeordnet wird. Die Wahrnehmung von Objektfarben und -grenzen stehen in gegenseitiger Wechselwirkung. Die exakten Zusammenhänge bezüglich der Funktionsweise dieser Wechselwirkung im menschlichen Gehirn sind erst teilweise verstanden. Im Falle von Störungen im visuellen System (z.B. bei Blindheit oder Farbenblindheit) wird die Objekterkennung ganz oder teilweise beeinträchtigt, woraus sich z.B. Orientierungsprobleme ergeben.

Es sind verschiedene Systeme bekannt, um blinden oder sehschwachen Personen die Erkennung von Gegenständen oder deren Betrachtung zu ermöglichen oder zu erleichtern. Auf der Grundlage des Global Positioning System (GPS-System) wurde ein "Personal Guidance System" genanntes, satellitengesteuertes Leitsystem entwickelt, mit dem sich Personen mit Sehstörungen mit Hilfe eines elektronischen Kompaß wichtige Orte wie z.B. Bushaltestelle oder Telefonzellen orten lassen können. Bei diesem System erfolgt keine Objekterkennung. Es ist nur für Objekte anwendbar, die in den systeminternen Topografien gespeichert sind. Damit ist das GPS-System auf spezielle Anwendungen, z.B. im öffentlichem städtischen Raum, beschränkt und beispielsweise in engen, geschlossenen Räumen mit zahlreichen, ggf. beweglichen Gegenständen nicht nutzbar.

Es ist ferner ein als Sehhilfe für Personen mit reduzierter Sehleistung, kommerziell angebotenes Farberkennungsgerät bekannt ("Color Test 150", Anbieter Care Tec Deutschland GmbH), bei dem mit einem Sensor punktweise eine Farbmessung erfolgt, deren Ergebnisse (Farbton, Helligkeit und Sättigung des vermessenen Punktes) über einen Lautsprecher ausgegeben werden. Die lokale Farbmessung mit einem einzigen Sensor besitzt die folgenden Nachteile.

Die menschliche oder visuelle Farbwahrnehmung in Bezug auf einen bestimmten Bereich im Gesichtsfeld (Punkt, Objekt, Segment) ist einerseits von rein lokalen Eigenschaften dieses Bereichs abhängig (hauptsächlich vom lokalen Reflexionsgrad und von der spektralen Energieverteilung der Beleuchtung bzw. bei Selbstleuchtern von der ausgesandten Strahlung). Andererseits ist die menschliche Farbwahrnehmung auch von der Umgebung des betrachteten Bereiches abhängig. So läßt sich z.B. allein durch Änderung der Umgebung die wahrgenommene Farbe beeinflussen, was sich beispielsweise beim simultanen Farbkontrast bzw. bei der Farbinduktion und in extremer Form beim sogenannten Land-Effekt zeigt. Der Umgebungseinfluß auf die wahrgenommenen Farben eines bestimmten Bereiches nimmt mit zunehmenden Abstand ab. Die unmittelbare Umgebung ist somit von besonderer Bedeutung für die Farbwahrnehmung. In welcher Weise die Gradienten, die durch die Form von Objekten oder durch Inhomogenitäten der Beleuchtung hervorgerufen werden, sich auf die Farbwahrnehmung auswirken, ist bislang nur teilweise geklärt. So ist beispielsweise die Farbkonstanzleistung des Gehirns (Invarianz der wahrgenommenen Objektfarbe bezüglich Beleuchtungsänderungen) erst zum Teil verstanden (siehe Publikation "Computational models of color constancy" A. C. Hurlbert in "Perceptual Constancy", Hrsg. V. Walsh et al., Cambridge University Press, Cambridge, 1998).

Beim lokal messenden Farberkennungsgerät werden die Umgebungsfarben nicht berücksichtigt, so daß die Farbwahrnehmung im allgemeinen verfälscht angegeben wird.

Außerdem muß das Farberkennungsgerät in die Nähe des zu messenden Objektes gebracht werden. Die Messungen beziehen sich nur auf die implementierten Lichtarten, so daß bereits die lokale Farbmessung starken Einschränkungen unterworfen ist. So schließt eine Punktmessung aus, daß zwischen Objekt- und Beleuchtungsfarbe unterschieden werden kann, sofern nicht eines von beiden bekannt ist. Für Farbwahrnehmungen, die stark von der Umgebung abhängen, wie z.B. "Braun" oder "Grau", kann das Gerät bauartbedingt keine richtigen Ergebnisse liefern.

Weitere Nachteile des herkömmlichen Farberkennungsgerätes bestehen darin, daß keine Angaben über geometrische Objekteigenschaften wie z.B. die Objektgröße oder die Entfernung bestimmter Objekt im Raum geliefert können. Außerdem ist es nicht möglich, Farben des Hintergrundes (z.B. des Himmels bzw. von Hintergrundsegmenten) zu vermessen.

Das Interesse an einer Farberkennung, mit der die menschliche Farbwahrnehmung simuliert wird, ist nicht auf das Gebiet der Sehhilfen beschränkt. Es besteht vielmehr auch im Bereich der Druck-, Lebensmittel- und Chemieindustrie sowie im Graphik- und Designbereich ein Bedarf an möglichst objektiven Mitteln zur Objekterfassung, insbesondere zur Erfassung der Farbwahrnehmung von farbigen Produkten.

In der Publikation von Q. Chen et al. in "Proc. of IEEE Intern. Conference on Computer Vision" Cambridge, MA, USA, 1995, Seite 591 ff., ist ein Verfahren zum Erkennen menschlicher Gesichter in Bildern auf der Grundlage der Erfassung der Gesichtsfarbe bekannt. Dabei wird einzelnen Bildpixeln unter Verwendung einer Fuzzy-Klassifizierung jeweils eine Farbe zugeordnet und diese Farbe in Bezug auf die Zugehörigkeit zu bestimmten Gesichtsfarben untersucht. Die pixelweise Klassifizierung erlaubt allgemein keine Rückschlüsse auf die durch einen Beobachter wahrgenommmene Farbe. Nur in Kombination mit anderen Eingangsinformationen (geometrische Informationen oder Informationen aus Vergleichsbeispielen) wäre eine Zuordnung zu Wahrnehmungsklassen möglich. Dies kann für spezielle Objekte mit bekannten charakteristischen Eigenschaften sinnvoll sein, besitzt aber in Anbetracht der praktisch unendlichen Zahl von Objekten und Betrachtungsbedingungen eine ungenügende Leistungsfähigkeit. Dies gilt insbesondere bei der Anwendung als Sehhilfe, bei der im allgemeinen keine Zusatzinformationen über Objekte im Sehfeld gegeben sind. Die Technik gemäß Q. Chen et al. ist für eine allgemein anwendbare Farberkennung mit Simulierung der menschlichen Farbwahrnehmung somit ungeeignet.

Ein weiteres Farbklassifikationsverfahren ist aus der Publikation von K.-H. Franke et al. in "Mustererkennung 1994", 16.

DAGM-Symposium, Wien, Springer-Verlag, Seite 624 ff., bekannt, das speziell auf die Erkennung von Mikrodefekten auf Halbleiteroberflächen zugeschnitten ist. Dieses Verfahren ist im wesentlichen durch dieselben Beschränkungen nachteilig, die oben unter Bezug auf die Gesichtserkennung genannt wurden. So erfolgt eine Farbauswertung an Einzelpixeln unter der Vorgabe vorbestimmter Modellfarben. Eine Aussage über eine menschliche Farbwahrnehmung ist damit bestenfalls für die bekannten Halbleiterstrukturen und deren bekannte Fehler möglich. Schon beim Auftreten neuer (unbekannter) Fehler würde dieses herkömmliche Verfahren versagen.

Aus der Publikation von D. Benitez-Diaz et al. in "Proceedings of the international conference on neural networks (ICNN)", US, New York, IEEE, Seite 1415 ff. (ISBN 0-7803-1902-8), ist ein Bildanalysesystem bekannt, bei dem eine Bildsegmentierung durch Netzwerkanalyse den Farbdaten einzelner Bildpixel durchgeführt wird.

Es ist die Aufgabe der Erfindung, verbesserte Verfahren zur optischen Objekterfassung anzugeben, die insbesondere eine Farbangabe zu einem erfaßten Objekt ermöglichen, die möglichst genau und reproduzierbar an die menschliche Farbwahrnehmung angepaßt ist und die einen erweiterten Anwendungsbereich in Bezug auf erfaßbare Objekte und/oder die technischen Anwendungsmöglichkeiten besitzen. Die Aufgabe der Erfindung ist es auch, Vorrichtungen zur Implementierung derartiger Verfahren anzugeben.

Diese Aufgabe wird durch ein Verfahren bzw. eine Vorrichtung mit den Merkmalen gemäß Anspruch 1 bzw. 15 gelöst. Ausführungsformen und Verwendungen der Erfindung ergeben sich aus den abhängigen Ansprüchen.

Das erfindungsgemäße Verfahren umfaßt insbesondere eine Datenoder Bildaufnahme, eine Bildsegmentierung, bei der ein bestimmtes Objekt oder Bildsegment aufgrund eines für dieses Objekt im wesentlichen unveränderlichen Bildparameters von benachbarten Objekten abgegrenzt wird, und eine Klassifizierung der Objektfarbe durch Zuordnen von Farbparametern des segmentierten Objekts zu einem bestimmten Farbwert in einem Farbraum. Die Bildaufnahme erfolgt vorzugsweise mit einer Bildaufnahmeeinrichtung, die zur Abbildung einer Objektanordnung in einer Szene und zur Bereitstellung vollständiger Bilddaten (Helligkeitsund/oder Farbwerte) des aufgenommenen Bildes, vorzugsweise in digitalisierter Form, eingerichtet ist. Der zur Bildsegmentierung bevorzugt herangezogene Bildparameter ist der Farbton. Die Objektklassifizierung erfolgt vorzugsweise unter Verwendung von Methoden der Fuzzy-Logik, wie z.B. Fuzzy-Clustering und/oder Fuzzy-Control.

Gemäß einer bevorzugten Ausführungsform der Erfindung erfolgt nach der Bildsegmentierung eine Segmentreduzierung, die auf eine Vereinfachung der Komplexität der Szene gerichtet ist. Bei der Segmentreduzierung werden die Bildpunkte, die zu dem erfaßten Objekt oder Bildsegment gehören und eine fallabhängig komplizierte Segmentgeometrie bilden, durch eine Gruppe von Bildpunkten ersetzt, die eine Segmentfläche in Gestalt einer regelmäßigen, geradlinig oder schwach gekrümmten Grundform, (z.B. Rechteck, Kreis, Ellipse oder dergleichen) bilden. Das reduzierte Bildsegment wird vorzugsweise derart gewählt, daß es vollständig das ursprüngliche Segment abdeckt. Beispielsweise ist vorgesehen, daß das zunächst erfaßte Objekt oder Bildsegment reduziert wird, indem es vollständig von einem rechteckigen Rahmen umgeben und die vom Rahmen eingefaßten Bildpunkte als das reduzierte Bildsegment erfaßt werden. Zur Ermittlung eines für das reduzierte Bildsegment charakteristischen Bildparameters wird über alle Farbwerte gemittelt, die den segmentierten Bereich, also im zunächst nicht reduzierten Bildsegment, auftreten. Die Segmentreduzierung stellt einen unerwarteten und für die folgende Objektklassifizierung wichtigen Vorteil dar. Es wurde festgestellt, daß das Ergebnis der erfindungsgemäßen Farberkennung durch die Segmentreduzierung nicht oder im Rahmen der jeweiligen Anwendung vernachlässigbar gering beeinflußt wird. Außerdem vereinfacht die Segmentreduzierung das im Rahmen der Objektklassifizierung durchgeführte Fuzzy-Control-Verfahren, dem die Zahl der für das Fuzzy-Control-Verfahren abzuarbeitenden Entscheidungen auf eine in der Praxis annehmbare Zahl reduziert wird.

Eine erfindungsgemäße Vorrichtung erfaßt eine Daten- oder Bildaufnahmeeinrichtung, z.B. eine Digitalkamera, eine Segmentierungseinrichtung, eine Klassifizierungseinrichtung und eine Ausgabeeinrichtung. Gemäß einer bevorzugten Anwendung der Erfindung bildet die Vorrichtung ein Hilfsgerät für Sehschwache oder Blinde, das zur Erfassung von Objekten, zur Bestimmung von deren Größe, Entfernung und Farbe und zur hörbaren oder tastbaren Ausgabe dieser Größen eingerichtet ist.

Unter optischer Objekterfassung wird hier die Erfassung der Farbwahrnehmung, Größe, Position und/oder Entfernung vom Betrachter bzw. von der Bildaufnahmeeinrichtung für ein Objekt in einer abgebildeten Szene verstanden. Ein Objekt ist ein im zweidimensionalen Bild aufgrund eines bestimmten Bildparameters von der Umgebung unterscheidbarer Ausschnitt (Segment).

Bevorzugte Anwendungen der Erfindung liegen im Bereich der Erstellung von Sehhilfen und von Meßgeräten für die Druck-, Lebensmittel- und Chemietechnik sowie im Graphik- und Designbereich. Bei der erfindungsgemäß Objekterfassung als Sehhilfe wird neben der genannten Klassifizierung der Objektfarbe auch eine Klassifizierung geometrischer Objektparameter oder eine Objekterkennung (z.B. Schrifterkennung) vorgenommen. Die Ausgabeeinrichtung ist für sehbehinderte Personen vorzugsweise durch einen Lautsprecher gegeben. Die Sehhilfe erlaubt insbesondere die Orientierung und ein sicheres Bewegen im Raum.

Die Erfindung besitzt die folgenden Vorteile. Mit dem erfindungsgemäßen System wird reproduzierbar ein Zusammenhang zwischen physikalischen (photometrischen) Meßgrößen und der menschlichen Farbwahrnehmung hergestellt. Dabei werden vorteilhafterweise nicht die Farbmerkmale einzelner Bildpunkte, sondern ganzer Bildsegmente und die Farbmerkmale des Umfeldes der Bildsegmente erfaßt, die für die Farbwahrnehmung von Bedeutung sind. Erstmalig werden ein Segmentierungsverfahren und Elemente der Fuzzy-Logik (Eingangs- und Ausgangsgrößen für die Fuzzy-Inferenz, Operatoren und Regeln) in einer optimal an die menschliche Farbwahrnehmung von unbekannten Objekten in realen Szenen (z.B. Lebensraum in täglicher Umgebung) angepaßten Weise gewählt

Die Erfindung besitzt einen breiten Anwendungsbereich und ist insbesondere gut für Applikationen bei Alltagssituationen anwendbar. Es wird eine Farberkennungseinrichtung geschaffen, die neben den photometrischen Meßdaten auch erlaubt, Eigenschaften der Neurologie, Physiologie und Psychologie des Sehens sowie linguistische, semantische und kulturelle Aspekte der Farbwahrnehmung zu berücksichtigen. Es wird eine zuverlässige Sehhilfe für Blinde oder Farbfehlsichtige geschaffen, mit der auch vom Betrachter entfernt angeordnete Objekte sicher erfaßt und klassifiziert werden können. Es ist möglich, sowohl die Farbwahrnehmung als auch die Größen-, Positions- und Entfernungsbestimmung in einem Gerät zu integrieren. Die mit der Erfindung erstmalig simultan implementierte Erfassung sowohl der Farbwahrnehmungsinformation als auch der Entfernungsinformation stellt einen wichtigen Vorteil der Erfindung bei Sehhilfeanwendungen dar. Es ist die Erfassung verhältnismäßig komplexer realer Szenen, auch in kleinen, geschlossenen Räumen mit einer Vielzahl von Objekten möglich. Die erfindungsgemäße Vorrichtung kann aus an sich, kommerziell verfügbaren Komponenten aufgebaut sein, so daß das System kostengünstig hergestellt werden kann. Die erfindungsgemäße Vorrichtung läßt sich miniaturisieren, so z.B. bis hin zum Aufbau einer wie eine Brille getragenen Sehhilfe, wobei die Ausgabeeinrichtung als Ohrhörer implementiert wird. Die Erfindung ist in der Farbforschung (Entwicklung von Farbräumen und Wahrnehmungsmodellen) anwendbar und für spezielle Anwendungen bei Verwendung der Fuzzy-Logik-Methoden optimal adaptierbar.

Im Gegensatz zu herkömmlichen Techniken bietet die Anwendung der Erfindung als Sehhilfe erstmalig die Möglichkeit für die Betroffenen, sich mit Hilfe eines einzigen Gerätes im Raum orientieren zu können. Über die Farbinformation wird die Orientierung und damit ein sicheres Bewegen im Raum ermöglicht.
Die erfindungsgemäße Erfassung der Farbwahrnehmung besitzt eine hohe Stabilität dahingehend, daß auf der Grundlage von Entscheidungsregeln, die an einfachen Testobjekten ermittelt wurden, beliebige Bildsituationen der natürlichen Umwelt zuverlässig ausgewertet werden können.

Weitere Vorteile und Einzelheiten der Erfindung werden im folgenden unter Bezug auf die beigefügten Figuren beschrieben. Es zeigen
- Fig. 1: ein Flußdiagramm zur Illustration des erfindungsgemäßen Verfahrens,
- Fig. 2: ein Flußdiagramm des Ablaufs einer Daten- oder Bilderfassung,
- Fig. 3: ein Flußdiagramm des Ablaufs einer Segmentierung,
- Fig. 4: ein Flußdiagramm zur Illustration von Fuzzy-Methoden,
- Fig. 5: ein Bildbeispiel zur Illustration der Segmentierung,
- Fig. 6: ein Bildbeispiel zur Illustration der Segmentreduzierung,
- Fig. 7: einen dreidimensionalen RGB-Farbraum mit acht Hypersphären und zugehörigen Cluster-Zentren,
- Fig. 8: eine graphische Illustration einzelner Regelsätze einer Fuzzy-Inferenz, und
- Fig. 9: eine Blockdarstellung einer erfindungsgemäßen Vorrichtung.

Die Erfindung wird im folgenden am Beispiel eines Systems zur Objekterfassung beschrieben, das als Sehhilfe eingerichtet ist. Bei anderen Anwendungen der Erfindung werden die erläuterten Verfahrensweisen analog implementiert, wobei jedoch ggf. Modifizierungen in Bezug auf die Datenerfassung und die Ergebnisausgabe erfolgen.

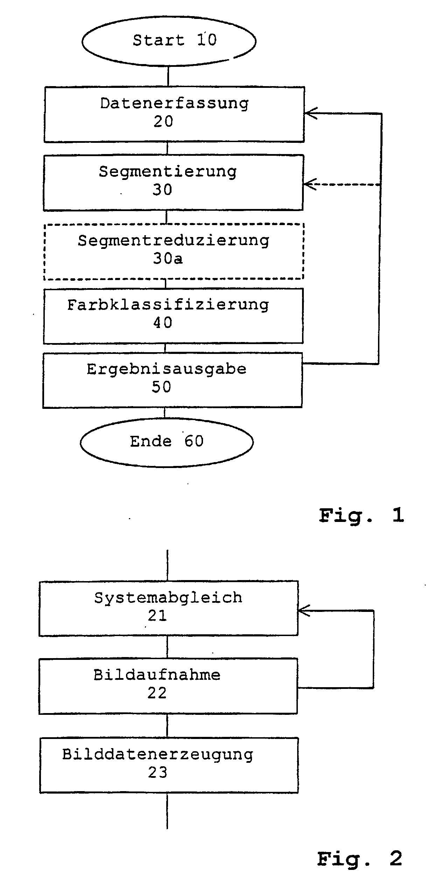

Entsprechend der Übersichtsdarstellung gemäß Fig. 1 erfaßt ein erfindungsgemäßes Verfahren die Schritte Datenerfassung 20, Segmentierung 30, Farbklassifizierung 40 und Ergebnisausgabe 50. Vor Beendigung des Verfahrens (Ende 60) erfolgt je nach dem Klassifizierungsergebnis ggf. zeitgleich vor oder simultan zur Ergebnisausgabe ein Rücksprung zur Datenerfassung 20 oder Segmentierung 30, um ggf. eine Fokussierung auf ein bestimmtes Objekt oder eine veränderte Segmentierung vorzunehmen. Nach der Segmentierung 30 sollte der Schritt Segmentreduzierung 30a vorgesehen sein. Die Segmentreduzierung 30a besitzt Vorteile für die spätere Anwendung der Entscheidungsregeln bei der Fuzzy-Inferenz (Reduzierung der Regelzahl), stellt jedoch kein zwingendes Merkmal der Erfindung dar. Einzelheiten der Schritte 20 bis 40 sind in den Figuren 2 bis 4 dargestellt.

Die Datenerfassung 20 (oder Bilderfassung) umfaßt gemäß Fig. 2 zunächst einen Systemabgleich 21, bei dem eine Bildaufnahmeeinrichtung (z.B. Digitalkamera oder Scanner) zur folgenden Bildaufnahme 22 vorbereitet wird. Der Systemabgleich 21 umfaßt beispielsweise bei kommerziell verfügbaren Kameras einen automatischen Weißabgleich (Abstimmung auf die verwendete Lichtart - z.B. Kunst- oder Tageslicht, wobei beispielsweise der hellste Bildpunkt als weiß bzw. als Farbe der Lichtquelle interpretiert wird) oder eine automatische Belichtungsmessung in Kombination mit einer Verstärkungssteuerung (z.B. Abstimmung unter der Voraussetzung, daß dem hellsten Bildpunkt die größtmöglichen Farbwerte zugewiesen werden). Mit derartigen Formen des Systemabgleichs ist in der Regel eine ausreichende Reproduktion der Farben der aufgenommenen Szene möglich. Der Systemabgleich 21 kann jedoch speziell angepaßte Algorithmen oder Kalibrierungen verwenden, um die Bildaufnahme auf konstrastarme Szenen oder auf Bildszenen mit extremer Beleuchtung abzustimmen.

Beim Systemabgleich 21 kann auch eine Entfernungsmessung durchgeführt werden. Hierzu wird beispielsweise ein kamerainternes, auf Kontrastbeziehungen basierendes Autofocus-System oder auch für Präzisionsmessungen eine laser-basierte Entfernungsmessung verwendet.

Nach der eigentlichen Bildaufnahme 22 zur Erstellung eines digitalen Farbbildes (Belichtungs- oder Scan-Vorgang) folgt die Bilddatenerzeugung 23 durch Bildung eines Datensatzes, der die Rot-, Grün- und Blauwerte (R-, G-, B-Werte) jedes Pixels des digitalen Farbbildes, die jeweils diskrete Werte zwischen einem minimalen und einem maximalen Wert annehmen können, umfaßt. Die Bilddaten umfassen somit drei Farbebenen mit den R-, G-, B-Werten eines jeden Pixels. Die Pixelzahl eines mit einer Kamera aufgenommenen Digitalbildes beträgt beispielsweise 740 · 568 Pixel. Die Digitalisierungstiefe beträgt z.B. 24 Bit (8 Bit pro Farbkanal), was rund 16,7 Millionen Farben entspricht. Parameter der digitalen Bildverarbeitung wie beispielsweise die Pixelzahl oder die Digitalisierungstiefe können jedoch anwendungsabhängig variiert werden.

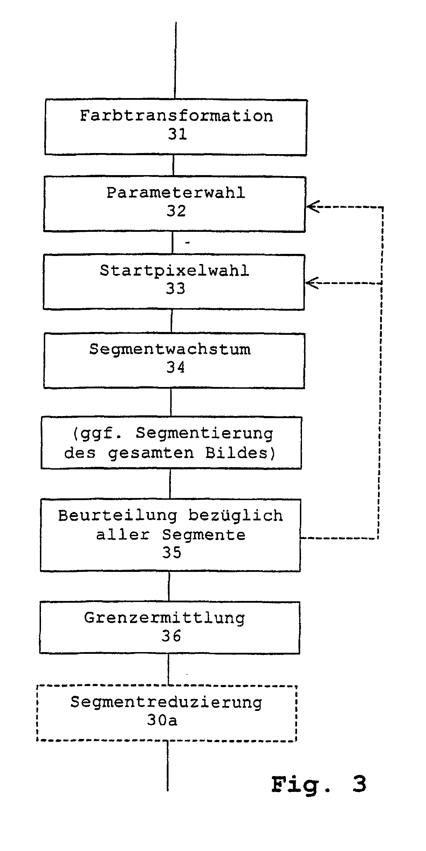

Bei der Segmentierung 30 erfolgt gemäß Fig. 3 zunächst eine Farbtransformation 31 von den einzelnen R-, G- und B-Ebenen des Farbbildes in einen an die weitere Segmentierung (s. unten) angepaßten Farbraum. Die Farbtransformation 31 ist anwendungsabhängig ein fakultativer Schritt, der jedoch aus den folgenden Gründen bei der Implementierung der Erfindung als Sehhilfe bevorzugt realisiert wird.

Die Betrachtung der einzelnen R-, G- und B-Ebenen eines Farbbildes zeigt, daß der RGB-Farbraum nur beschränkt zur sprachüblichen Charakterisierung von Farben und zur Bildsegmentierung geeignet ist. So kann beispielsweise aus den R-, G- und B-Anteilen eines Objekts nur unter wohldefinierten Bedingungen auf die wahrgenommene Farbe rückgeschlossen werden. Da die im RGB-Bild enthaltenen Informationen die Objekte in Bezug auf die Farbe und (abgesehen von der Dimensionsreduzierung bei 2D-Bildern) auch Geometrie vollständig charakterisieren, besteht das Ziel der Farbtransformation 31 darin, diese Informationen in einen optimalen auswertbaren Parameterraum (Farbraum) zu übertragen.

Die Farbtransformation 31 der RGB-Werte kann beispielsweise eine lineare Transformation z.B. in CIE-XYZ-Werte oder in Farbwerte, die den Zapfensignalen im Auge entsprechen (LMS-Signale) oder nichtlineare Transformationen in Farbräume umfassen, die der menschlichen Wahrnehmung und der üblichen farblichen Beschreibung der Farbwahrnehmung besser angepaßt sind. Diese Farbräume umfassen beispielsweise den HSL-Raum (Farbton-Sättigung-Helligkeit oder Hue-Saturation-Lightness-Raum), einen HSV-Raum, den CIE-L*a*b*- oder CIE-L*h_{ab}C*_{ab} -Raum, den CIE-L*u*v*-Raum oder dgl. Die Farbtransformation 31 kann auch in jüngst entwickelte Farbwahrnehmungsräume (entsprechend den sog. "Color Appearance"-Modellen, wie das CIE-CAM '97 nach R.W.G. Hunt, oder den RLAB-Raum nach M. D. Fairchild) mit Dimensionen wie "Brightness", "Lightness", "Colorfullness", "Chroma", "Hue", oder "Saturation" führen (s. hierzu auch Mark D. Fairchild "Color Appearance Models", Edison-Wesley, 1998).

Nach der Farbtransformation 31 erfolgt im Zielfarbraum eine Parameterwahl 32, bei der eine Dimension oder ein Parameter des Zielfarbraumes ausgewählt wird, der innerhalb eines Objekts oder Segments nahezu konstant ist und sich an Objektgrenzen möglichst stark ändert. Diese Parameterwahl 32 erfolgt somit anwendungsabhängig je nach gewähltem Zielfarbraum.

Die Segmentierung 30 erfolgt vorzugsweise mit einer Farbtransformation 31 vom RGB-Bild in den HSV- oder L*h_{ab}C*_{ab}-Raum, wobei als bevorzugter Parameter der H-Wert (Farbton oder Hue-Wert) gewählt wird. Der H-Wert zeigt sich innerhalb eines einfarbigen Objekts in einer dreidimensionalen Szene ausreichend konstant. Die Segmentierung erfolgt daher vorzugsweise in der Farbton-Ebene, in der sich die Objekte bzw. Hintergrundbereiche besonders effektiv voneinander trennen lassen.

Im weiteren Verfahren erfolgt zunächst die Startpixelwahl 33. Ein bestimmtes Pixel der Szene in der Farbton-Ebene wird als Startpixel für die weitere Segmentierung ausgewählt. Eine typische Wahl ist beispielsweise ein Pixel in der Bildmitte oder in einem vorher ermittelten Bereich. Dieser vorher ermittelte Bereich zeichnet sich beispielsweise durch besondere Bildmerkmale aus, die eine Unterscheidung eines Objekts von der jeweiligen Umgebung z.B. aufgrund des Farbtons, des Kontrasts, der Helligkeit oder dergleichen erlauben. Die Segmentierung kann auch dahingehend modifiziert sein, daß nicht ein bestimmtes Objekt ausgewählt wird, sondern daß das gesamte Bild segmentiert wird. Das komplette Digitalbild wird wie folgt in relevante Segmente eingeteilt. Das Bild wird vollständig in ein zu bestimmendes Objekt (eine zusammenhängende Pixelfläche) und dessen Umgebungssegmente sowie eventuelle Löcher segmentiert. Mittels Gewichtung der Umgebungssegmente und Löcher (hier gehen die Entfernung, Größe, Position und Kontrast usw. bezüglich des zu bestimmenden Objektes ein) wird unter Verwendung von Fuzzy-Control-Klassifizierungsverfahren die wahrgenommene Farbe berechnet. Anschließend erfolgt ggf. die Bewertung und Klassifizierung jedes weiteren Segments in Bezug auf alle anderen Segmente z.B. mit dem Fuzzy-Control-Verfahren, wie es unten erläutert wird.

Beim nachfolgenden Segmentwachstum 34 werden zuerst die an das Startpixel angrenzenden Pixel erfaßt, deren H-Wert eine Differenz vom H-Wert des Startpixels zeigt, die kleiner als ein vorbestimmter Schwellwert ist. Anschließend werden die angrenzenden Pixel der beim ersten Schwellwertvergleichsschritt ermittelten Nachbarpixel des Startpixels untersucht, ob der H-Wert innerhalb eines vorbestimmten H-Intervalls um den H-Wert des Startpixels liegen. Durch diese Schwellwertvergleichsschritte erfolgt ausgehend vom Startpixel das Wachstum einer Pixelgruppe bis an die Grenzen des entsprechenden Objekts, in dessen Abbildungsbereich der Startpixel liegt, da an den Grenzen die H-Werte stärker als die zugelassene Toleranz (H-Intervall) veränderlich sind.

Es wurde festgestellt, daß die beim Segmentwachstum 34 ausgewählten Bereiche in der Regel gut mit Grenzen oder Segmentgrenzen des Hintergrundes übereinstimmen. Außerdem hat sich gezeigt, daß bei diesem Segmentwachstum Reflexe der Lichtquelle (häufig weiß) nicht mit ausgewählt oder segmentiert werden, selbst wenn sie innerhalb des betrachteten Objektes liegen.
Dies ist ein besonderer Vorteil des erfindungsgemäßen Verfahrens, da sich die Klassifizierung der Farbwahrnehmung unabhängig von Reflexen in vielen Fällen als vorteilhaft erweist, da sich Reflexe nachteilig auf die Mittelwertbildung bzw. Integration über die Objektfläche auswirken. Es ergeben sich zwar Einschränkungen bei der Ausgabe der Objektausdehnung, die bei praktischen Anwendungen als Sehhilfe jedoch in der Regel von geringer Bedeutung sind, was im Einzelfall vom Bildinhalt abhängen kann.

Bei der folgenden Beurteilung 35 wird das ermittelte Segment oder Objekt in Bezug auf seine geometrischen Eigenschaften bewertet. Falls ein ausgewähltes Objekt bestimmten Randbedingungen nicht genügt, die zuvor festgelegt werden, z. B. wenn der gesamte Bildinhalt oder nur ein Pixel ausgewählt ist, so besteht die Möglichkeit eines Rücksprungs zur Parameterwahl 32 und/oder zur Startpixelwahl 33. Diese Schritte können mit dem Segmentierungswachstum 34 und einer Beurteilung 35 so oft wiederholt werden, bis ein ausreichend bestimmtes Ergebnis vorliegt. Anschließend erfolgt eine Grenzermittlung 36. Dabei wird die äußere bzw. innere Umrandung des gewachsenen Objekts als Datensatz ermittelt. Die Objektsegmentierung umfaßt somit die Ermittlung aller Bildpunkte innerhalb der Umrandung.

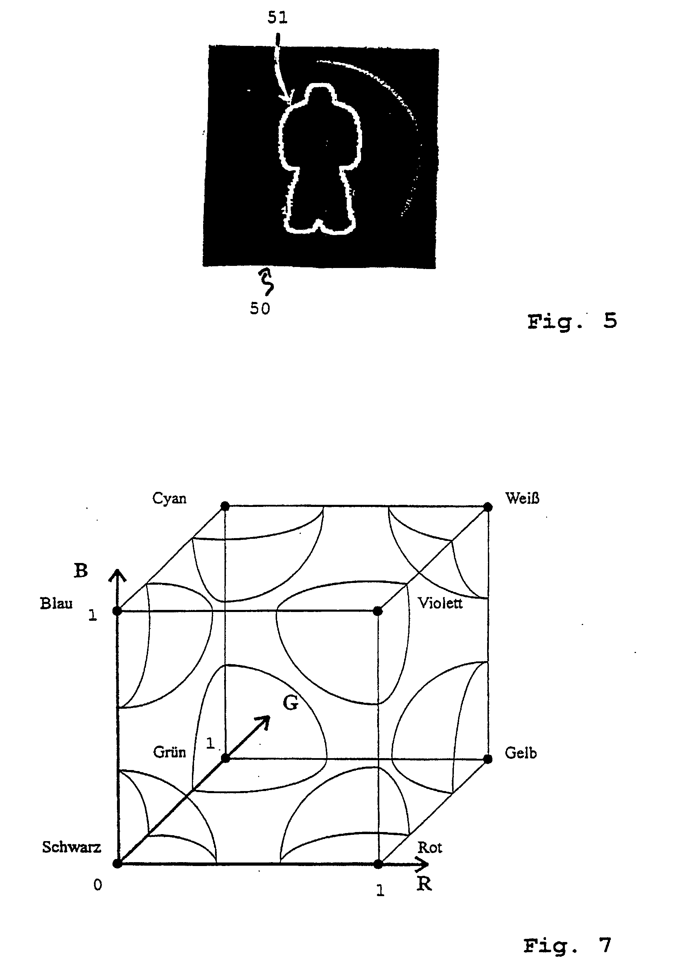

Figur 5 zeigt beispielhaft eine bei Abbildung einer Ampel 50 (in der Originalvorlage: rote Farbe des Ampelmännchens) ermittelte Grenze 51 des durch die Figur gebildeten Bereiches gleichen Farbtons.

Das hier vorgestellte Segmentierungsverfahren eignet sich vorteilhafterweise auch für die zweidimensionalen Bilder von realen komplexen Szenen mit dreidimensionalen Objekten. Falls die betrachteten Szenen in der Farb-tonebene keine Informationen über die Objektgrenzen liefern, so müssen Informationen aus anderen Ebenen des jeweiligen Farbraumes oder sogar aus anderen Farbräumen hinzugezogen werden. Hierzu ist beispielsweise ein Rücksprung vom Beurteilungsschritt 35 zur Farbtransformation 31 implementierbar.

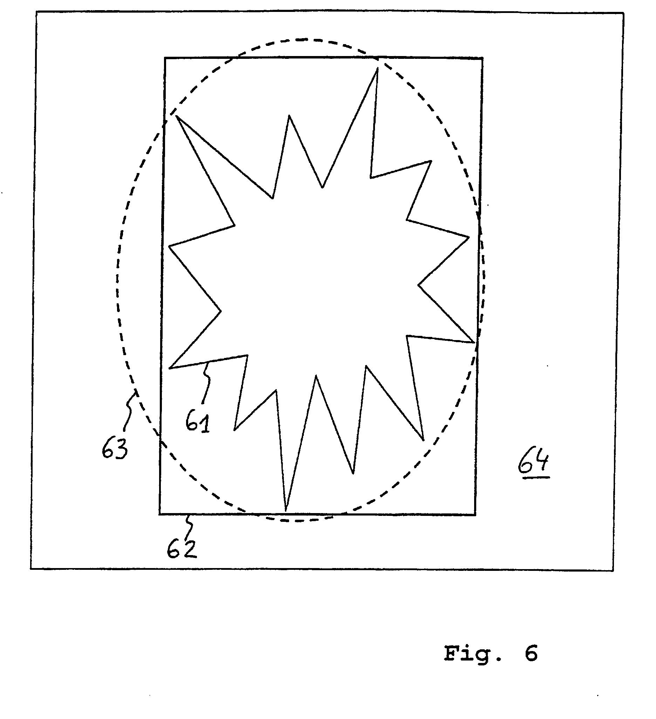

Die Objektsegmentierung gemäß Fig. 3 ist kein zwingendes Merkmal des erfindungsgemäßen Verfahrens. Anwendungsabhängig kann die Segmentierung vollständig unterlassen oder durch einen anderen Segmentierungsvorgang ersetzt werden, bei dem Objekte und Segmentgrenzen nicht aufgrund der Farbe sondern mit anderen Merkmalen erkannt werden (z.B. Segmentierung durch Beobachtung zeitabhängiger Positionsänderungen von Objekten oder der Kamera oder durch Verwendung von Kanten-Detektionsalgorithmen (z. B. Gradientenverfahren)). Bei der Segmentierung könnten dann auch Angaben über die Objektgeschwindigkeit, Bewegungsrichtung, Beschleunigung und dergleichen als Ergebnis geliefert werden. Nach der Grenzermittlung 36 erfolgt fakultativ die Segmentreduzierung 30a (siehe auch Figur 1). Bei der Segmentreduzierung 30a werden die innerhalb der Umrandung ermittelten, zum Segment gehörigen Bildpunkte durch eine größere Bildpunktmenge ersetzt, die die zum Segment gehörigen Bildpunkte und weitere Bildpunkte zur Bildung einer vereinfachten Segmentfläche umfaßt. Beispielsweise wird im Rahmen der Segmentreduzierung 30a das in Figur 6 illustrierte, zunächst ermittelte unregelmäßige Bildsegment 61 durch das reduzierte Bildsegment 62 ersetzt. Das reduzierte Bildsegment 62 ist beispielsweise, wie dargestellt, ein Rechteck mit Seitenlängen, die den maximalen Ausdehnungen des ursprünglichen Bildsegments in zwei zu einer senkrecht stehenden Richtungen entsprechen. Alternativ kann z.B. auch ein reduziertes Bildsegment 63 in Form einer Ellipse gebildet werden. Nach Ermittlung aller zum reduzierten Bildsegment gehörigen Bildpunkte wird dem reduzierten Bildsegment ein mittlerer Farbwert zugeordnet, der dem Mittelwert über sämtliche Farbwerte im ursprünglich segmentierten Bereich entspricht.

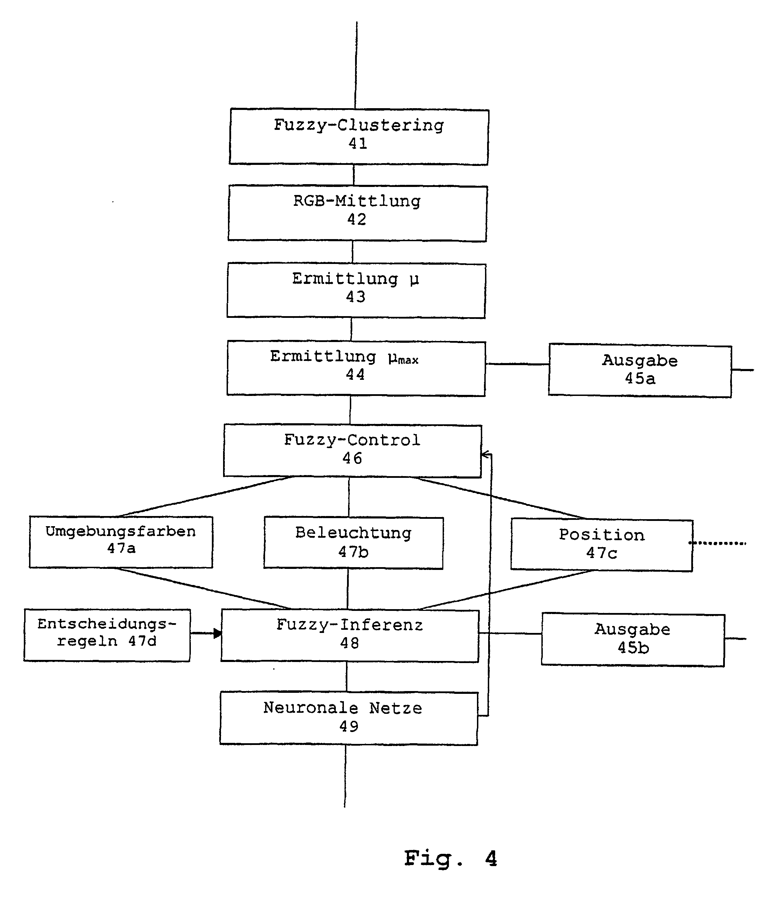

Im folgenden wird die Klassifizierung 40 der Objektfarbe (s. Fig. 1) unter Bezugnahme auf das Flußdiagramm gemäß Fig. 4 und die Darstellung der Cluster-Zentren im RGB-Farbraum gemäß Fig. 6 erläutert. Zur Farbklassifizierung werden Methoden der Fuzzy-Logik verwendet. Hierzu zählen insbesondere die im folgenden als Fuzzy-Clustering bezeichnete einfache Cluster-Zuordnung und die im folgenden Fuzzy-Control bezeichnete komplexere Cluster-Zuordnung.

Ausgangspunkt der Klassifizierung ist das Fuzzy-Clustering. Die Kombination mit Fuzzy-Control oder die iterative, wiederholte Abarbeitung beider Verfahrensweisen (zur Erzeugung von Unterklassen übergeordneter Hauptklassen) sind fakultativ zur Verbesserung des Verfahrens realisierbar. Gemäß einer Ausführungsform der Erfindung ist jedoch auch Fuzzy-Control, das genauere Farbwahrnehmungsangaben ermöglicht, alleine und ohne das vorherige Fuzzy-Clustering implementiert, was zwar schneller Farbwahrnehmungsangaben ermöglicht, dies jedoch mit einer gröberen Einteilung.

Beim Fuzzy-Clustering werden vorbestimmte Bezugs-Farbräume in unscharfe Hypersphären eingeteilt, in deren Zentren jeweils die wichtigsten Repräsentanten einer Wahrnehmungsklasse liegen. Dies bezieht sich beispielsweise auf Farbton-, Helligkeitsoder Sättigungsklassen oder auf die von Berlin und Kay ermittelten elf Farbklassen bezüglich der Benennung von Farben. Einem segmentierten Objekt wird dann ein Farbmerkmal durch dessen Lage in Bezug auf die Hypersphären bzw. die Cluster-Zentren zugeordnet. Bei der Fuzzy-Control-Klassifizierung erfolgt diese Zuordnung zusätzlich unter Berücksichtigung von weiteren, komplexen Merkmalen der Szene, wie z.B. den Farbwerten von Umgebungsobjekten, Kontrastbeziehungen zu anderen Bildsegmenten, Abhängigkeiten von der Beleuchtung und dgl. Die mathematischen Grundlagen zu den Verfahren Fuzzy-Clustering und Fuzzy-Control sind an sich bekannt und werden beispielsweise in den Büchern von H. Kiendl ("Fuzzy Control methodenorientiert", Oldenbourg Verlag, 1997), H.R. Tizhoosh ("Fuzzy Bildverarbeitung, Einführung in Theorie und Praxis"), Springer Verlag, 1998, und L.A. Zadeh ("Fuzzy sets", in: "Information and Control" 8, 1965, 338-353) beschrieben.

Zusätzlich zu Fuzzy-Clustering und Fuzzy-Control können erfindungsgemäß sogenannte neuronale Fuzzy-Systeme implementiert werden, die lernfähig sind und nach entsprechenden Trainingsvorgängen Bildszenen verarbeiten können, die nicht vorher gelernte Bilddatensätze beinhalten. Der besondere Vorteil der Fuzzy-Control-Klassifizierung besteht darin, daß anwendungsabhängig eine beliebige Genauigkeit allein durch die Anzahl der berücksichtigten Regeln erzielt werden kann, ohne den bereits erzielten Präzisionsgrad zu verringern. Die Fuzzy-Control-Klassifizierung erlaubt beliebig viele Fallunterscheidungen unter Verwendung der unten erläuterten "WENN-DANN-Regeln". Außerdem erlauben Fuzzy-Control-Verfahren eine Simulation des visuellen Wahrnehmungsprozesses analog zum Gehirn, wobei die Verarbeitung in verschiedenen Stufen erfolgt, die im Gehirn der Retina, den sogenannten seitlichen Kniehöckern, dem primär visuellen Cortex, höheren Cortex-Ebenen, mit Modulen für Form, Farbe und Bewegung und dgl. zugeordnet werden können. Zwischen diesen Strukturen bzw. beim Fuzzy-Control-Verfahren zwischen den Merkmalsdimensionen besteht ein ständiger Informationsaustausch mit Zugriffen und Rückkopplungen zu den verschiedenen Verarbeitungsstufen.

Gemäß Fig. 4 wird beim Fuzzy-Clustering 41 wie folgt vorgegangen. Nachdem wie oben beschrieben zur Segmentierung des digitalen Bildes einer Videokamera unter Verwendung der Farbtonebene die Fläche um einen Startpixel in Richtung aller angrenzenden Pixel ausgedehnt wird, bis ein vorbestimmter Farbtondifferenz-Schwellwert überschritten ist, und damit ein bestimmter, einem Objekt oder Segment zugeordneter Bildbereich festgelegt ist, werden die Bildpunkte dieses segmentierten und ggf. reduzierten Bildbereiches im RGB-Raum betrachtet. Bei der RGB-Mittlung 42 werden alle zum Bildbereich gehörenden RGB-Werte gemittelt und zu einem Tripel aus RGB-Werten zusammengefaßt. Dieses Tripel mittlerer RGB-Werte besitzt eine bestimmte Position im RGB-Farbraum, der wie folgt in acht Objektfarbklassen (Hypersphären eingeteilt ist).

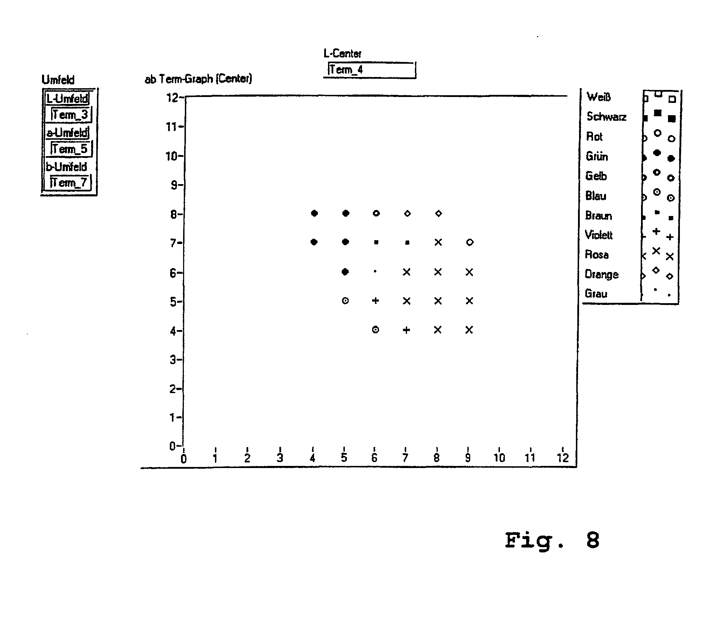

Fig. 7 zeigt beispielhaft den RGB-Farbraum mit den acht Objektfarbklassen Schwarz, Weiß, Rot, Grün, Gelb, Blau, Cyan und Violett. Die Cluster-Zentren finden sich an den Ecken eines Würfels (RGB-Würfel). Bei dem in Fig. 7 gezeigten RGB-Würfel gehört z.B. das RGB-Tripel mit den Werten (0/0/0) zu 100 % zur Farbklasse "Schwarz". Dementsprechend wird ein Zugehörigkeitswert ermittelt, der die Zugehörigkeit eines bestimmten Tripels zu einer Farbklasse mit einer %-Angabe beschreibt. Der Zugehörigkeitswert µ für das Tripel (0/0/0) beträgt beispielsweise für die Klasse "Schwarz" µ=1 und für alle anderen Farbklassen µ=0. Die Zugehörigkeitswerte µ werden beim Fuzzy-Clustering unter der Nebenbedingung ermittelt, daß sich die Zugehörigkeitswerte eines Tripels in Bezug auf alle Farbklassen zu 1 addieren. Die Berücksichtigung einer solchen Nebenbedingung ist jedoch nicht zwingend erforderlich. Die Zugehörigkeitswerte µ werden beispielsweise nach dem sogenannten "Fuzzy-c-Means"-Algorithmus (FCM) berechnet, der eine unscharfe Klassifizierung erlaubt (s. R.H. Tizhoosh in "Fuzzy-Bildverarbeitung. Einführung in Theorie und Praxis", Springer Verlag 1998, S. 106 ff.). Bei der Cluster-Ermittlung am RGB-Würfel werden beispielsweise folgende relevante Parameter vorgegeben:
- Anzahl der Klassen: 8
   (Schwarz, Weiß, Rot, Grün, Blau, Gelb, Cyan, Violett)

Alternativ ist eine Entwicklung auf elf Farbklassen (gegebenenfalls unter Berücksichtigung des Umfeldes mit Fuzzy-Control-Klassifizierung) möglich (Schwarz, Weiß, Rot, Grün, Blau, Gelb, Violett, Rosa, Orange, Braun, Grau).
- Anzahl der Merkmale der einzelnen Objekte: 3 (R-, G-, B-Werte)
- Wichtungsexponent (Maß für die Unschärfe): 2
- Initialisierungsmatrix: Einheitsmatrix
- Abbruchsschwelle: 0.001

Die Nebenbedingung, daß die Summe aller Zugehörigkeitsgrade µ=1 ist, kann bei Modifizierung des Fuzzy-Clustering-Verfahrens (z.B. Ansatz nach dem "Possiblistic c-Means"-Verfahren) fallengelassen werden.

Das FCM-Verfahren ist auf kugelförmige Hypersphären beschränkt. Es können alternativ andere Fuzzy-Clustering-Verfahren vorgesehen sein, deren Sphären kompliziertere Formen umfassen. Dies ist von Vorteil, da die menschliche Farbwahrnehmung nicht vollständig mit kugelförmigen Hypersphären beschrieben werden kann. Eine weitere Verbesserung der Farbwahrnehmungsangabe wird durch die Implementierung der Fuzzy-Control-Klassifizierung (s.u.) erreicht.

Nach der RGB-Mittlung 42 erfolgt somit die Ermittlung der Zugehörigkeitswerte µ (43). Ein RGB-Tripel kann beispielsweise für ein konkretes Objekt die folgenden Zugehörigkeitswerte besitzen: Schwarz: 0,1, Weiß: 0,2, Rot: 0,5, Grün: 0,0, Gelb: 0,1, Blau: 0,0, Cyan: 0,0, Violett: 0,1.

Im weiteren Verfahren erfolgt die Ermittlung des maximalen Zugehörigkeitswertes µₘₐₓ (44). Gemäß einer ersten Ausführungsform der Erfindung wird als Ergebnis für die Objektfarbe des segmentierten Objekts der Name der Farbklasse mit dem größten Zugehörigkeitswert µₘₐₓ angegeben. Dies ist beim o.g. Beispiel der Zugehörigkeitswert µ = 0,5, so daß sich die Objektfarbe "Rot" ergibt. Dieses Ergebnis wird dann mit der Datenausgabe 45a zur weiteren Verarbeitung vorbereitet. Alternativ kann vorgesehen sein, daß zusätzlich die Farbklasse mit dem zweitgrößten Zugehörigkeitsgrad µ ausgeben wird, falls die Differenz zwischen dem ersten (größten) und zweiten (zweitgrößten) Zugehörigkeitsgrad kleiner als ein vorbestimmter Schwellwert ist. Die Ergebnisausgabe würde dann beispielsweise lauten "Rot-Weiß".

Gemäß einer zweiten Ausführungsform der Erfindung schließt sich an das Fuzzy-Clustering die weitere Klassifizierung durch Fuzzy-Control 46 an, wie es unten im einzelnen erläutert wird. Die hier beschriebene Klassen- oder Clusterzuordnung erfolgt unter dem beispielhaften Bezug auf den RGB-Raum. Die Wahl des zum Fuzzy-Clustering herangezogenen Farbraumes ist anwendungsabhängig modifizierbar. Entsprechendes gilt für die genaue Lage der Cluster-Zentren (Zentren der Hypersphären oder Farbklassen) im Farbraum. Es ist vorzugsweise vorgesehen, die Lage der Cluster-Zentren auf der Grundlage von Expertenwissen vorzugeben oder anhand von Beispielen zu bestimmen. Ferner muß die exakte Form der Hypersphären im Farbraum anwendungsabhängig gewählt werden. Es ist möglich, durch Hinzunahme weiterer Dimensionen bzw. durch Verschieben der Cluster-Zentren und durch Verwendung verschiedener Clusteralgorithmen im Raum der Hypersphären eine Anpassung des Fuzzy-Clustering an die konkrete Wahrnehmungsanwendung vorzunehmen. Dabei kann auch iterativ anhand von Bezugsobjekten mit definierten Farben vorgegangen werden. Die Zahl der Hypersphären läßt sich gegenüber dem Beispielwert 8 erhöhen oder erniedrigen.

Bei der folgenden Fuzzy-Control-Klassifizierung 46 werden wie beim Fuzzy-Clustering 41 die Farbwerte des auswählten oder segmentierten Objekts betrachtet. Im Rahmen der Schritte 47a, 47b, 47c ... werden Zusatzparameter ermittelt, die bei der späteren Regelung oder Zuordnung von Farb-Clustern berücksichtigt werden sollen. Zu diesen Zusatzparametern zählen beispielsweise die Umgebungsfarben (47a) (hierzu wird das gesamte Bild segmentiert), die Beleuchtung (47b), Positionsparameter (47c), zusätzliches Expertenwissen (47d) und dgl. Zu den Beleuchtungsparametern (47b) zählen beispielsweise die Beleuchtungsart (Spotbeleuchtung, homogene Beleuchtung, mehrere Lichtquellen o. dgl.), Farbwerte der Beleuchtung und die Beleuchtungsrichtung. Die Positionsparameter können sich auf die geometrische Anordnung der Objekte oder Abstandsinformationen oder dgl. beziehen.

Das zusätzliche Expertenwissen kann beispielsweise aus der Verteilung der Farbwerte extrahiert oder über zusätzliche Geräte erfaßt werden und betrifft z.B. Oberflächeneigenschaften der betrachteten Objekt (Rauheit, Glanz) oder dgl.. Nach der Ermittlung der Zusatzparameter (47) folgt die eigentliche Regelung/ Klassifizierung des Fuzzy-Control. Bei der Fuzzy-Inferenz 48 werden die gewünschten Farbmerkmale eines segmentierten Objekts mit Hilfe von "WENN-DANN"-Regeln (Entscheidungsregeln) eines Fuzzy-Reglers berechnet.

Die Implementierung der "WENN-DANN-Regeln" erfolgt beispielsweise gemäß folgendem Schema (sog. Fuzzy-Inferenz):

| | |
|---|---|
| *WENN* *und* | Farbwerte des ausgewählten Objektes = (x₁/x₂/x₃) Kontrastbeziehungen zum Umfeld = ... (z.B. Farbwerte des ersten angrenzenden Objektes = (y₁/y₂/y₃) |
| *und* | Werte der Beleuchtung = ... |
| *und* | ... |
| ... | |
| *DANN* | wird das ausgewählte Objekt mit der Farbwahrnehmung (z.B. Blau, Hell, gesättigt usw.) wahrgenommen und besitzt das Objekt einen Abstand von x Metern und ist *y* Zentimeter hoch und z breit, usw. |

Entscheidungsregeln, die ausschließlich auf die L,a,b-Werte des Objektes (Center) und seines Umfeldes bezogen sind, können beispielsweise diese Form besitzen (zur Erläuterung des Term-Begriffes siehe unten):

| | |
|---|---|
| *WENN* | L-Umfeld = Term 1 |
| *und* | a-Umfeld = Term 2 |
| *und* | b-Umfeld = Term 5 |
| *und* | L-Center = Term 4 |
| *und* | a-Center = Term 5 |
| *und* | b-Center = Term 8 |
| *Dann* | Weiss = Term 1 |

Bei derartigen Schemata können alle Informationen bekannter Wahrnehmungsmodelle und auch zeitliche Objektänderungen berücksichtigt werden.

Zur Ermittlung des Expertenwissens bzw. der Entscheidungsregeln (Schritt 47d) können Testreihen mit normalsichtigen Versuchspersonen durchgeführt werden. Das Expertenwissen kann in Form von Fuzzy-Regeln (ggf. iterativ) zur Verwendung in der Fuzzy-Inferenz 48 implementiert werden. Im folgenden wird die Fuzzy-Inferenz 48 mit einer Vielzahl von Entscheidungsregeln auf der Grundlage der zuvor bestimmten Objekt- und Umgebungsfarben (Schritt 47a) im einzelnen erläutert. Dabei wird von einer Bildauswertung mit Segmentierung und Segmentreduzierung und direkter Anwendung des Fuzzy-Control-Verfahrens (ohne das Fuzzy-Clustering-Verfahren) ausgegangen.

Bei der Fuzzy-Inferenz 48 werden die vorab ermittelten (gemessenen) Farbparameterwerte des reduzierten Segments (zum Beispiel Segment 62 in Figur 6) und des Umfeldes (siehe Bezugszeichen 64 in Figur 6) mit einer Vielzahl vorab ermittelter und gespeicherter Entscheidungsregeln ausgewertet. Die Entscheidungsregeln bilden einen Regelsatz, der wie folgt durch Versuchsreihen mit menschlichen Beobachtern erzeugt worden ist.

Die Ermittlung der Entscheidungsregeln erfolgt durch Versuchsreihen, bei denen Versuchspersonen auf einem Monitor synthetische Farbbilder mit einem mittleren Segment (z. B. 62 in Figur 6) und einem Umfeld (64 in Fig. 6) mit verschiedenen Farbmerkmalen (voreingestellte Farbparameterwerte, z. B. L,a,b-Werte) betrachten und jeweils die subjektive Farbwahrnehmung angeben. Die Farbmerkmale des Bildes und die Angabe der Versuchsperson werden als Eingangsgrößen bzw. Ausgangsgrößen auf der Basis sogenannter Eingangs- bzw. Ausgangs-Terme für die Entscheidungsregeln verwendet. Ein Eingangs-Term ist eine Fuzzy-Menge, deren Elemente aus Farbparameterwerten und Zugehörigkeitswerten bestehen, die jeweils die Zugehörigkeit der Farbparameterwerte zum Term charakterisieren. Ein Ausgangs-Term ist eine Fuzzy-Menge, deren Elemente Farbwahrnehmungswerte (z.B. Rotanteil in %) und entsprechende Zugehörigkeitswerte in Bezug auf den Term umfassen.

Eine Gruppe von Entscheidungsregeln ist in Figur 8 illustriert. Figur 8 zeigt eine graphische Darstellung der Zuordnung von Ausgangsgrößen entsprechend den in der rechten Spalte angegebenen Farbwahrnehmungen zu bestimmten Kombinationen von Eingangsgrößen. Die Eingangsgrößen sind für das Segment in der Mitte (Center) für den L-Wert der Term 4 und für die a-(Abszisse)-Werte ein Term zwischen Term 4 und Term 9 und für die b-Ordinate-Werte ein Wert zwischen Term 4 und Term 8. Für das Umfeld gelten als Eingangsgrößen für a: Term 5, für b: Term 7 und für L: Term 3. Je nach Einstellung der a- und b-Werte des Segments gibt mindestens eine Versuchsperson ihre Farbwahrnehmung an. Beispielsweise wird für a = 6 und b = 7 für das Segment in der Mitte "braun" wahrgenommen, während sich für a = 9 und b = 4 eine Farbwahrnehmung "rosa" ergibt. Nach diesem Schema werden sämtliche, für eine konkrete Anwendung in Frage kommenden Eingangs-Term-Kombinationen (Reizkombination) für Versuchszwecke am Monitor dargestellt und die entsprechenden Entscheidungsregeln als Implikationen entsprechend dem obigen Schema aufgenommen und gespeichert. Jede vorgegebene Reizkombination führt für jede Farbwahrnehmungsklasse zu jeweils einer neuen Entscheidungsregel. Beim dargestellten Beispiel ergeben sich für jede Reizkombination 11 Entscheidungsregeln, deren Konklusionen für die wahrgenommene Farbwahrnehmungsklasse beispielsweise (Ausgangs-)Term 1 und für alle nicht wahrgenommenen Farbwahrnehmungsklassen (Ausgangs-)Term 0 lauten. Entsprechendes ist auch für andere Bildmerkmale (Kontrastbeziehungen oder dergleichen) möglich.

Ein für eine zuverlässige Farberkennung ausreichender Regelsatz kann rund 10.000 bis 100.000 oder auch mehr einzelne Entscheidungsregeln umfassen, die hier jedoch nicht im einzelnen aufgeführt werden können. Jede Entscheidungsregel ist entsprechend dem oben genannten Schema gebildet und umfaßt im einfachsten Fall eine Implikation mit zwei UND-verknüpften Eingangsgrößen. Die Eingangsgrößen umfassen beispielsweise die Farbmerkmale des (reduzierten) Segments und des Umfeldes mit den L-, a- und b-Variablen im oben genannten L*a*b*-Farbraum. Dabei können die Helligkeits- (L) bzw. Farb- (a-, b-) Merkmale durch Fuzzy-Mengen (Zugehörigkeitsverteilungen, Eingangs-Terme) beschrieben werden.

Im Rahmen der Fuzzy-Inferenz 48 erfolgt nach der Messung (ggf. mit Klassifizierung) der Farbmerkmale (Farbparameterwerte) des Segments und des Umfeldes zunächst eine Eingangs-Term-Zuordnung. Der Wertebereich jedes Farbparameterwertes wird durch eine Gruppe von Eingangs-Termen überdeckt, die sich zumindest teilweise überlappen können. Die Zugehörigkeitsfunktionen der jeweiligen Eingangs-Terme besitzen beispielsweise die Gestalt einer Dreiecksfunktion. Für einen konkret gemessenen Farbparameterwert ergeben sich bei einfach überlappenden Termen zwei verschiedene Zugehörigkeitswerte zu zwei benachbarten Eingangs-Termen.

Es wird beispielsweise ein Farbbild mit einem mittig angeordneten Segment und einem farbigen Umfeld betrachtet. Für die L-Eingangsgrößen werden sechs Eingangs-Terme und für die a- und b-Eingangsgrößen jeweils elf Eingangs-Terme (Fuzzy-Mengen) verwendet. Das Ziel der Fuzzy-Inferenz 48 besteht nun darin, dem Segment einen Zugehörigkeitswert zu einer bestimmten (Farb-) wahrnehmungsklasse entsprechend der menschlichen Farbwahrnehmung zuzuordnen. Diese Farbwahrnehmungsklasse wird unter Anwendung der unten erläuterten Operatoren aus elf möglichen Ausgangsgrößen ausgewählt, für die jeweils zwei Ausgangs-Terme verwendet werden. Die Zahl der verwendeten Terme kann anwendungsabhängig verändert werden.

Bei einem einfachen Segment-Umfeld-Reiz werden insgesamt sechs Eingangsgrößen (drei Merkmale für das Segment und drei Merkmale für das Umfeld) ausgewertet. Beim folgenden Beispiel werden jedoch aus Übersichtlichkeitsgründen nur zwei Eingangsgrößen (a, b) und eine Ausgangsgröße ("weiss") betrachtet. Eine Entscheidungsregel soll z.B. heißen:
"*WENN* a = Term 1 *und* b = Term 2, *DANN* "weiss" = Term 0".
Der a-Wert (z.B.: 20) hat die Zugehörigkeit µ (a = 20) = 0.5 zum Eingangs-Term 1, während der b-Wert (z.B.: 10) eine Zugehörigkeit µ (b = 10) = 0.3 zum Eingangs-Term 2 besitzt. Bei diesem Beispiel werden die Zugehörigkeiten zu weiteren Termen der Einfachheit halber nicht betrachtet.

Zur Auswertung der Entscheidungsregel erfolgt zunächst ein Aggregationsschritt auf der Basis eines Minimum-Operators. Das "*und"* wird als Minimum interpretiert, das bei der beispielhaft angegebenen Entscheidungsregel mit Min (0.5 und 0.3) = 0.3 gegeben ist. Das Ergebnis des Aggregationsschrittes ist somit eine reine Zahl.

Es schließt sich der Implikationsschritt an, der wiederum auf der Basis eines Minimum-Operators erfolgt. Die Ausgangsgröße "weiss" hat zwei überlappende Fuzzy-Mengen (Ausgangs-Term 0 und 1). Der Minimum-Operator bildet aus den Elementen des Termes 0 und dem Erfüllungsgrad der Regelprämisse (0.3) jeweils das Minimum (anschaulich bedeutet dies, daß der Term 0 auf der Höhe 0.3 abgeschnitten wird). Das Ergebnis dieses Schrittes ist eine Fuzzy-Menge, die insbesondere ein Element einer Farbwahrnehmungs-Ausgangsgröße und einen Zugehörigkeitswert entsprechend dem Minimum-Operator des Implikationsschrittes umfaßt.

Auf diese Weise (Aggregations- und Implikationsschritte) werden sämtliche Entscheidungsregeln durchgearbeitet, so daß sich eine Vielzahl von Fuzzy-Mengen entsprechend der Anzahl von Entscheidungsregeln ergeben. Im weiteren Verlauf der Fuzzy-Inferenz 48 werden diese Fuzzy-Mengen noch weiterverrechnet.

Hierzu erfolgt zunächst ein Akkumulationsschritt mit einem Maximum-Operator. Bei diesem Schritt wird aus allen Fuzzy-Mengen, die aus den Implikationsschritten gefolgt sind, eine neue Vereinigungsmenge gebildet, in dem das Maximum der Einzelmengen verwendet wird. Das Ergebnis ist wiederum eine Fuzzy-Menge.

Schließlich folgt zur Ermittlung eines zahlenmäßigen Ergebnisses, z.B. eines Zugehörigkeitsgrades zwischen 0 und 1 für die Ausgangsgröße "weiss" ein Defuzzyfizierungs-Schritt, bei dem nach der Schwerpunktmethode der Schwerpunkt der resultierenden Fuzzy-Menge gebildet wird. Die Schwerpunktmethode wird beispielsweise von H. R. Tizhoosh et al. (siehe oben) beschrieben.

Zur Ergebnisausgabe wird die Ausgangsgröße mit dem größten Zugehörigkeitsgrad als Ergebnis angegeben, z.B. "grün". Falls die Zugehörigkeitsgrade nahe beieinander liegen, kann auch vorgesehen sein, daß als Ausgangsgröße zwei Farbwert mit dem größten und dem zweitgrößten Zugehörigkeitsgrad angegeben werden, z.B. "grün-gelb". Das Ergebnis der Fuzzy-Inferenz 48 wird bei der Datenausgabe 45b zur weiteren Verarbeitung vorbereitet.

Es können auch andere Operatoren und Defuzzyfizierungsmethoden verwendet werden. Die Regelsätze müssen dann ggf. entsprechend angepaßt werden. Die beschriebene Methode besitzt jedoch den Vorteil einer hohen Robustheit und Leistungsfähigkeit. Die verwendete Fuzzy-Inferenz ist die sogenannte Mamdani-Inferenz. Erfinsungsgemäß können auch mit anderen Fuzzy-Inferenzen und Defuzzyfizierungsmethoden Farbwahrnehmungen simuliert werden.

Der in Fig. 4 angegebene Schritt 49 bezeichnet eine weitere Modifizierung des erfindungsgemäßen Verfahrens durch die Kombination der Fuzzy-Methoden mit neuronalen Netzwerken (neuronale Fuzzy-Systeme), wodurch eine Lernfähigkeit des Systems erzielt wird. Es kann vorgesehen sein, daß das neuronale Netz zusätzlich unmittelbar nach der Datenerfassung (Bilderfassung) oder nach der Segmentierung eingebaut wird, um gelernte und nicht gelernte Biddatensätze unterscheiden zu können.

Die Ergebnisausgabe 45b bzw. 50 (s. Fig. 1) erfolgt anwendungsabhängig in Datenform, als Anzeige oder als Ansage, oder mit mechanischen, durch den Nutzer fühlbaren Mitteln. Im medizinischen Bereich erfolgt vorzugsweise der Einsatz eines Text-Sprach-Konverters, um die ermittelte Farbwahrnehmung mit einem Kopfhörer oder Lautsprecher hörbar zu machen, so daß die betroffene Person Informationen über die Farbe, Größe, Position und/oder Entfernung der im Gesichtsfeld befindlichen Objekte erhält. Die Benennung von Farben erfolgt vorzugsweise zu Klassen von Farbnamen, die in den meisten Kulturen verwendet werden und z.B. von B. Berlin, P. Kay et al. ("Basic Color Terms.: Their Universality and Evolution", Berkeley, CA; University of California Press) und I.C. McManus ("Half-a-Million Basic Color Words - Berlin and Kay and the Usage of Color Words in Literature and Science", Perception 1997, VL 26(N3), 367-370) beschrieben sind. Die Ergebnisausgabe kann auch mit einer mechanische wirksamen Orientierungshilfe implementiert werden, wie sie in "Bild der Wissenschaft" (8/1998, S. 10) beschrieben ist.

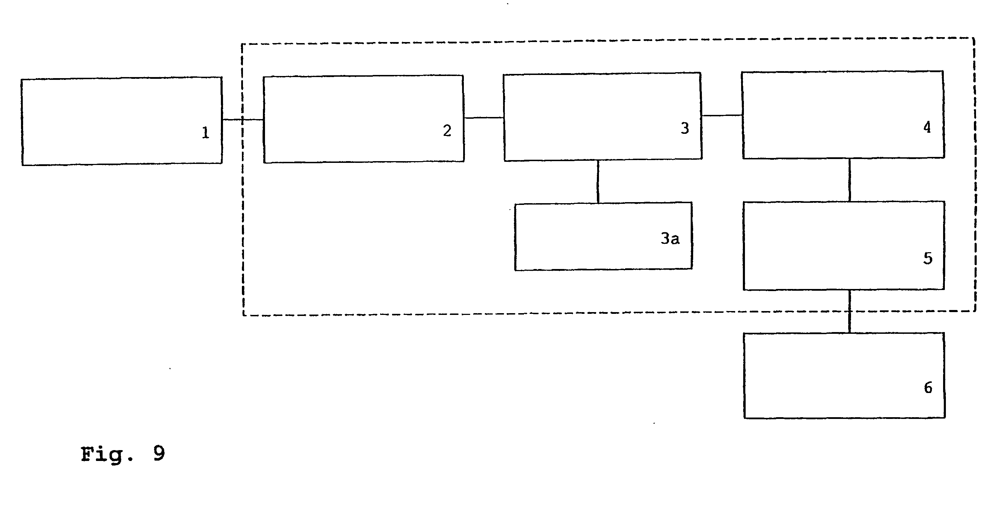

Eine erfindungsgemäße Vorrichtung umfaßt gemäß der in Fig. 9 dargestellten Ausführungsform eine Datenaufnahmeeinrichtung 1 (z.B. Kamera, Scanner oder spektroskopische Anordnung), eine Datenerfassungs-Einheit 2, in der das RGB-Bild bestimmt wird, eine Transformations- und Recheneinheit 3, in der die Transformation des RGB-Bildes in einem geeigneten Zielfarbraum erfolgt, eine Segmentierungs-Einheit 4 zur Ermittlung des Bildbereiches, für den nachfolgend in der Fuzzy-Einheit 5 die Farbwahrnehmung ermittelt werden soll. Zur Ergebnisausgabe ist die Fuzzy-Einheit mit einer Datenausgabe 6 (z.B. in Form eines Displays, Druckers und/oder Audiogerätes) verbunden. Die Komponenten 2, 3, 4 und 5 der erfindungsgemäßen Vorrichtung sind vorzugsweise in einen als Mikrocomputer integriert ausgeführt. Die Transformations- und Recheneinheit 3 ist bei technischen-industriellen Anwendungen vorzugsweise mit einer Anzeigeeinheit 3a verbunden, die zur Darstellung des Bildes der aufgenommenen Szene in der Farbtonebene eingerichtet ist. Die Anzeigeeinheit 3a ist entweder ein Zusatzmonitor oder in die Ausgabeeinheit 6 integriert.

Das erfindungsgemäße Farbwahrnehmungssystem kann wie folgt modifiziert werden. Es kann vorgesehen sein, beim Fuzzy-Control die einzelnen Pixel nicht als Tripel, sondern allgemein als Merkmalsvektoren zu betrachten, die neben den drei Farbparametern weitere, höhere Dimensionen, wie z.B. Wahrnehmungsparameter (z.B. Glanz, Oberflächeneigenschaften und dgl.) enthalten. Diese Fähigkeit zur Verallgemeinerung bzw. zur Einführung weiterer Parameter stellt einen besonderen Vorteil der Erfindung dar. Herkömmliche Analysen von Bildszenen in angepaßten Wahrnehmungsräumen sind häufig an einen bestimmten Effekt bei der Bildwahrnehmung angepaßt und nur beschränkt modifizierbar. Erfindungsgemäß kann hingegen jeder neue Wahrnehmungseffekt durch Erhöhung der Anzahl der "WENN-DANN-Regeln", der linguistischen Terme (Wahrnehmungsbenennungen) und/oder der Parameterzahl oder verschiedene Fuzzy-Regelungsverfahren in den beim Fuzzy-Control eingeführten Vektoren berücksichtigt werden, ohne daß die ursprünglichen Parameter verloren gehen und die bis dahin erreichte Präzision abnimmt.

Wegen der bevorzugten Anwendung als Sehhilfe wurde oben bei der Bildaufnahmeeinrichtung auf eine farbige Bildaufnahme auf der Basis von RGB-Arrays Bezug genommen. Die menschliche Retina enthält drei Zapfenarten mit jeweils breitbandigen, sich überlappenden Spektren. Bei nicht-medizinischen Anwendungen kann jedoch ein Interesse bestehen, eine höhere Spektral-Auflösung einzuführen, so daß statt einer RGB-Bildaufnahme eine Bildaufnahme mit Spektren-Arrays mit einer größeren Anzahl spektraler Empfindlichkeitsmaxima durchgeführt wird. Ferner kann statt der zweidimensionalen Bildaufnahme eine dreidimensionale Bildabtastung oder analog zur menschlichen Wahrnehmung die Bildaufnahme mit zwei Kameras unterschiedlicher Positionen (Paralaxe) vorgesehen sein. Dadurch wird bei der Objekterfassung die Tiefeninformation berücksichtigt. Bei der sprachkonvertierten Ergebnisausgabe können Zusatzinformationen zu den betrachteten Objekten, wie z.B. "links", "rechts", "oben", "unten", "Mitte", oder Informationen zur Beleuchtung (Richtung etc.), zu Objektmaßen, Entfernungen oder Flächenanteilen von Objekten ausgegeben werden.

Die erfindungsgemäße Farberkennung kann mit einer Schrifterkennung kombiniert werden, z.B. unter Verwendung des Programms "Corel OCR-Trace". In diesem Fall erfolgt neben der Farbwahrnehmungsausgabe auch eine Sprachausgabe erfaßter Worte in einer Bildszene (z.B. Schilder o. dgl.).

## Patentansprüche

1. Verfahren zur Objekterfassung, mit den Schritten:
- Daten- oder Bildaufnahme, bei der aus einer Abbildung einer Szene Bilddaten ermittelt werden,
- Bildsegmentierung der Bilddaten zur Ermittlung mindestens eines Objekts der abgebildeten Szene, für das ein Farbparameter im wesentlichen konstant ist, und
**gekennzeichnet durch**
- eine Farbklassifizierung für das mindestens eine Objekt zur Ermittlung einer wahrgenommenen Objektfarbe, wobei dem Objekt mit einer Fuzzy-Control-Klassifizierung aller zur abgebildeten Szene gehörenden Bildpunkte eine Farbklasse unter einer Vielzahl von Farbklassen in einem vorbestimmten Farbraum zugeordnet wird, wobei die Zuordnung der Farbklassen unter Verwendung von Fuzzy-Regeln auf der Basis von Testreihen mit normalsichtigen Versuchspersonen erfolgt und die zugeordnete Farbklasse der Objektfarbe der visuellen Farbwahrnehmung des Objekts in der Szene entspricht.

2. Verfahren gemäß Anspruch 1, bei dem zur Bildsegmentierung ausgehend von einem vorbestimmten Startpixel alle Bilddaten zu einem Objekt zusammengefaßt werden, die sich in Bezug auf ein vorbestimmtes Farbmerkmal weniger als ein definierter Schwellwert von dem Farbmerkmal des Startpixels unterscheiden.

3. Verfahren gemäß Anspruch 2, bei dem die Bilddaten nach der Bildaufnahme in einen für die Bildsegmentierung angepaßten Farbraum transformiert werden.

4. Verfahren gemäß Anspruch 3, bei dem die Bilddaten nach der Bildaufnahme R-G-B-Daten umfassen, die zur Segmentierung in einen vorbestimmten Farbraum transformiert werden, wobei das zur Segmentierung betrachtete Farbmerkmal ein in diesem Farbraum gegebener Parameter ist, der über die Fläche des betrachteten Objekts im wesentlichen unveränderlich ist.

5. Verfahren gemäß Anspruch 4, bei dem die Transformation in den HSL- oder L*h_{ab}C*_{ab}-Raum erfolgt und das zur Segmentierung betrachtete Farbmerkmal der Farbton-Parameter des HSL- oder L*h_{ab}C*_{ab}-Raumes ist.

6. Verfahren gemäß Anspruch 4 oder 5, bei dem, falls mit der Bildsegmentierung mit einem Farbmerkmal das betrachtete Objekt nicht abgegrenzt werden kann, weitere Farbmerkmale oder Bildmerkmale wie z. B. Kanten berücksichtigt werden.

7. Verfahren gemäß Anspruch 6, bei dem die weiteren Farbmerkmale die Helligkeit und/oder die Farbsättigung umfassen.

8. Verfahren gemäß Anspruch 1, bei dem nach der Bildsegmentierung eine Segmentreduzierung zur Vereinfachung der geometrischen Gestalt des im Ergebnis der Bildsegmentierung ermittelten Objekts erfolgt.

9. Verfahren gemäß Anspruch 1, bei der der mittlere Farbparameter des objekts vor der Klassifizierung einem Fuzzy-Clustering-Verfahren unterzogen wird.

10. Verfahren gemäß einem der vorhergehenden Ansprüche, wobei zur Fuzzy-Control-Klassifizierung zur Ermittlung der Farbklasse des betrachteten Objekts weitere Farbeigenschaften oder geometrische Eigenschaften des Bildes berücksichtigt werden.

11. Verfahren gemäß Anspruch 10, wobei zur Fuzzy-Control-Klassifizierung zur Ermittlung der Farbklasse des betrachteten Objekts die Farbeigenschaften des Umfeldes des Objekts berücksichtigt werden.

12. Verfahren gemäß einem der vorhergehenden Ansprüche, bei dem nach der Klassifizierung der Objektfarbe eine Ergebnisausgabe zur Darstellung der ermittelten Farbklasse auf einer Anzeige oder in Audio-Form erfolgt.

13. Verfahren gemäß einem der vorhergehenden Ansprüche, das als Sehhilfe für Personen mit einer Sehbehinderung oder Blinde verwendet wird.

14. Verfahren gemäß einem der vorhergehenden Ansprüche, bei dem zusätzlich zur Klassifizierung der Objektfarbe auch geometrische Eigenschaften mindestens eines Objekts der abgebildeten Szene erfaßt werden.

15. Vorrichtung zur Objekterfassung, die zur Durchführung eines Verfahrens mit den Schritten gemäß Anspruch 1 eingerichtet ist und eine Bildaufnahmeeinrichtung (1) zur Bildaufnahme einer Szene, eine Datenerfassungs-Einheit (2) zur Erzeugung von Bilddaten, eine Transformations- und Recheneinheit (3), eine Segmentierunaseinheit (4) zur Bildsegmentierung der Bilddaten und zur Auswahl eines vorbestimmten Objektes der Szene und eine Datenausgabe (6) umfaßt
**gekennzeichnet durch**
eine Fuzzy-Recheneinheit (5) zur Ermittlung einer dem Objekt zugeordneten Farbklasse aus den Bilddaten und aus Testreihen mit normalsichtigen Versuchspersonen.

16. Verwendung einer Vorrichtung gemäß Anspruch 15 als Sehhilfe für Personen mit einer Sehbehinderung oder als Orientierungshilfe für Blinde.

17. Verwendung einer Vorrichtung gemäß Anspruch 15 zur Durchführung des Verfahrens gemäß einem der Ansprüche 1 bis 14.

## Claims

1. Method for detecting an object, having the steps:
- capture of data or an image, in which image data are determined from a representation of a scene,
- image segmentation of the image data to determine at least one object of the represented scene, for which one colour parameter is substantially constant, and
**characterised by**
- a classification of the colours of the at least one object to determine a perceived object colour, a colour class from a plurality of colour classes in a predetermined colour zone being allocated to the object using a fuzzy control classification of all the image points belonging to the represented scene, the allocation of the colour classes taking place using fuzzy rules on the basis of series of tests with normal-sighted test subjects, and the allocated colour class of the object colour corresponding to the visually perceived colour of the object in the scene.

2. Method according to claim 1, wherein for image segmentation, starting from a predetermined initial pixel, all the image data which differ in respect of a predetermined colour characteristic by less than a defined threshold value from the colour characteristic of the initial pixel are combined into an object.

3. Method according to claim 2, wherein, after the capture of an image, the image data are transformed into a colour zone adapted for the image segmentation.

4. Method according to claim 3, wherein, after the capture of an image, the image data include R-G-B data which are transformed into a predetermined colour zone for segmentation, the colour characteristic observed for segmentation being a parameter given in this colour zone, which parameter is substantially constant over the area of the observed object.

5. Method according to claim 4, wherein the transformation takes place into the HSL or L*h_{ab}C*_{ab} zone and the colour characteristic observed for segmentation is the hue parameter of the HSL or L*h_{ab}C*_{ab} zone.

6. Method according to claim 4 or 5, wherein, if the observed object cannot be delimited using image segmentation with one colour characteristic, additional colour characteristics or image characteristics, such as edges for example, are taken into account.

7. Method according to claim 6, wherein the additional colour characteristics include brightness and/or colour saturation.

8. Method according to claim 1, wherein, after the image segmentation, a segment reduction takes place to simplify the geometrical shape of the object determined as a result of the image segmentation.

9. Method according to claim 1, wherein the mean colour parameter of the object is subjected to a fuzzy clustering method before classification.

10. Method according to one of the preceding claims, wherein, for the fuzzy control classification to determine the colour class of the observed object, additional colour properties or geometrical properties of the image are taken into account.

11. Method according to claim 10, wherein, for the fuzzy control classification to determine the colour class of the observed object, the colour properties of the surrounding field of the object are taken into account.

12. Method according to one of the preceding claims, wherein, after the classification of the object colour, a result is output to represent the determined colour class on a display or in audio form.

13. Method according to one of the preceding claims, which is used as an aid to vision for the visually impaired or the blind.

14. Method according to one of the preceding claims, wherein in addition to the classification of the object colour, geometrical properties of at least one object of the represented scene are also detected.

15. Device for detecting an object, which device is set up to implement a method having the steps according to claim 1 and includes an image capture device (1) to capture an image of a scene, a data acquisition unit (2) to generate image data, a transformation and arithmetic logic unit (3), a segmentation unit (4) for the image segmentation of the image data and to select a predetermined object in the scene, and a data output (6), **characterised by** a fuzzy arithmetic logic unit (5) to determine a colour class allocated to the object from the image data and from series of tests with normal-sighted test subjects.

16. Use of a device according to claim 15 as an aid to vision for the visually impaired or as an aid to orientation for the blind.

17. Use of a device according to claim 15 for implementing the method according to one of claims 1 to 14.

## Revendications

1. Procédé pour la détermination d'un objet comprenant les étapes suivantes :
- Prise de données ou prise de vue, où, à partir de la représentation d'une scène, sont déterminées des données d'images,
- Segmentation d'image des données d'images pour déterminer au moins un objet de la scène représentée, pour lequel un paramètre de couleur est principalement constant, et **caractérisé par**
- une classification de couleurs pour le au moins un objet afin de déterminer une couleur d'objet perçue, où une classe de couleur parmi une pluralité de classes de couleur dans une zone de couleurs prédéfinie est attribuée à l'objet à l'aide d'une classification à contrôle flou de tous les points de l'image appartenant à la scène représentée, où l'attribution des classes de couleur s'effectue par l'utilisation de règles floues sur la base de séries de tests effectués sur des personnes dont la vue est normale et où la classe de couleur attribuée de la couleur de l'objet correspond à la perception visuelle de l'objet dans la scène.

2. Procédé selon la revendication 1, dans lequel, pour la segmentation de l'image à partir d'un pixel de départ prédéfini, toutes les données d'images, qui, par rapport à une caractéristique de couleur prédéfinie, se différentient de la caractéristique de couleur du pixel de départ moins qu'une valeur seuil définie, sont regroupées dans un objet.

3. Procédé selon la revendication 2, dans lequel les données d'images sont transformées après la prise de vue dans une zone de couleur adaptée à la segmentation d'image.

4. Procédé selon la revendication 3, dans lequel les données d'images comprennent, après la prise de vue, des données R-V-B, qui sont transformées pour la segmentation en une zone de couleur prédéfinie, où la caractéristique prise en compte pour la segmentation est un paramètre donné dans cette zone de couleur, paramètre qui est principalement invariable à la surface de l'objet considéré.

5. Procédé selon la revendication 4, dans lequel la transformation s'effectue dans la zone HSL- ou L*h_{ab}C*_{ab} et dans lequel la caractéristique prise en compte pour la segmentation est le paramètre de tonalité de couleur de la zone HSL- ou L*h_{ab}C*_{ab}.

6. Procédé selon la revendication 4 ou 5, dans lequel, si l'objet considéré ne peut pas être délimité avec sa caractéristique de couleur par la segmentation d'image, d'autres caractéristiques de couleur ou caractéristiques d'image, comme des bordures, sont prises en compte.

7. Procédé selon la revendication 6, dans lequel les autres caractéristiques de couleur comprennent la luminosité et/ou la saturation de la couleur.

8. Procédé selon la revendication 1, dans lequel, après la segmentation d'image, s'effectue une réduction de segment pour simplifier la forme géométrique de l'objet déterminé par le résultat de la segmentation d'image.

9. Procédé selon la revendication 1, dans lequel le paramètre de couleur moyen de l'objet est soumis avant la classification à un procédé de regroupement flou.

10. Procédé selon l'une des revendications précédentes, dans lequel d'autres propriétés de couleur ou d'autres propriétés géométriques de l'image sont prises en compte pour la classification à contrôle flou dans le but de déterminer la classe de couleur de l'objet considéré.

11. Procédé selon la revendication 10, dans lequel les propriétés de couleur dans le champ autour de l'objet sont prises en compte pour la classification à contrôle flou dans le but de déterminer la classe de couleur de l'objet considéré.

12. Procédé selon l'une des revendications précédentes, où après la classification de la couleur de l'objet s'effectue une communication du résultat pour l'affichage de la classe de couleur déterminée par une indication visuelle ou un signal auditif.

13. Procédé selon l'une des revendications précédentes, qui est utilisé comme assistance visuelle pour des personnes ayant un handicap visuel ou pour des non-voyants.

14. Procédé selon l'une des revendications précédentes, dans lequel, en plus du processus de classification de la couleur de l'objet, des propriétés géométriques d'au moins un objet de la scène représentée peuvent être également saisies.

15. Dispositif de détermination d'un objet mis en place pour exécuter un procédé avec les étapes de la revendication 1, comprenant un équipement de prise de vue (1) pour la prise de vue d'une scène, une unité de saisie de données (2) pour la production de données d'images, une unité de transformation et de calcul (3), une unité de segmentation (4) pour la segmentation des données d'images et pour la sélection d'un objet prédéfini de la scène et une indication de données (6), **caractérisé par** une unité de calcul flou (5) pour la détermination d'une classe de couleur attribuée à l'objet à partir des données d'images et de séries de tests effectués sur des personnes dont la vue est normale.

16. Utilisation d'un dispositif selon la revendication 15 comme assistance visuelle pour des personnes ayant un handicap visuel ou comme aide à l'orientation pour des non-voyants.

17. Utilisation d'un dispositif selon la revendication 15 pour exécuter le procédé selon l'une des revendications 1 à 14.
